# EUROPÄISCHE PATENTANMELDUNG

(11) **EP 0 639 473 A2**
(43) Veröffentlichungstag der Anmeldung: **22.02.1995**
(21) Anmeldenummer: 94112824.1
(22) Anmeldetag: 17.08.1994
(51) Int. Cl.: B60G 15/10, F16F 7/10

(54) **Luftfeder zur Abstützung eines Fahrzeugkörpers**

(30) Priorität: 19.08.1993 DE 4327883
(71) Anmelder: Continental Aktiengesellschaft, D-30165 Hannover (DE)
(72) Erfinder: Prinzler, Hubertus, D-30853 Langenhagen (DE); Gawinski, Hubertus, D-31275 Lehrte (DE)

(57) **Zusammenfassung**

Eine Luftfeder stützt einen Fahrzeugkörper auf einem anderen, schwingenden Fahrzeugbauteil mit einem druckluftbeaufschlagbaren Luftfederbalg (1) ab. Die Enden (2,7) des Luftfederbalges sind auf je einem Anschlußteil luftdicht angeordnet, wobei das eine Anschlußteil am Fahrzeugkörper und das andere am Fahrzeugbauteil angebracht sind. Um Schwingungen des Fahrzeugbauteils im Resonanzbereich zu reduzieren, weist das am Fahrzeugbauteil angebrachte Anschlußteil (4) eine elastisch angebundene Schwingungstilgermasse (18) auf.

## Beschreibung

Die Erfindung betrifft eine Luftfeder zur Abstützung eines Fahrzeugkörpers auf einem anderen schwingenden Fahrzeugbauteil gemäß dem Oberbegriff des Patentanspruchs 1.

Luftfedern mit elastomeren Luftfederbälgen sind in einer Vielzahl von Ausführungsformen bekannt und haben sich z.B. als Fahrzeugfederungen, insbesondere zur Abfederung von Fahrzeugaufbauten gegenüber Radachsen von Lastkraftwagen und Autobussen oder Fahrerhaus gegenüber Fahrzeugrahmen im großen Umfang bewährt. Die Luftfederbälge sind an ihren Enden an je einem Anschlußteil dicht befestigt, die gewöhnlich aus Metall oder Kunststoff gefertigt sind. Über die Anschlußteile ist der Luftfederbalg einerseits am Fahrzeugrahmen und andererseits auf der Fahrzeugachse befestigt.

Es wurde festgestellt, daß im luftgefederten Fahrzeug Schwingungen an der Achse auftreten, die in der Eigenfrequenz der Achse liegen können.

Die Schwingungen an der Achse werden beispielsweise durch Höhenschlag eines Rades oder Fahrbahnunebenheiten eingeleitet. Liegen die Schwingungen in der Eigenfrequenz der Achse hat dies negative Auswirkungen auf den Fahrkomfort und die Fahrsicherheit des Fahrzeuges. Weiter wurde festgestellt, daß der durch die Luftfederung abgestützte Fahrzeugkörper durch die größeren Schwingungskräfte zu mechanischen Schwingungen bzw. Vibrationen angeregt werden kann. Diese machen sich in dem Fahrzeugkörper störend bemerkbar. Weiter kann über diese Anregung Körperschall abgestrahlt werden.

Der Erfindung liegt die Aufgabe zugrunde, eine Luftfeder der eingangs geschilderten Art zu schaffen, durch deren Aufbau Schwingungen des Fahrzeugbauteils im Resonanzbereich reduziert werden.

Die Aufgabe wird erfindungsgemäß dadurch gelöst, daß das am Fahrzeug angebrachte Anschlußteil eine elastisch angebundene Schwingungstilgermasse aufweist.

Das am Fahrzeugbauteil angebrachte Anschlußteil weist einen integrierten Schwingungstilger auf, der die Schwingungen im Resonanzbereich des Fahrzeugbauteiles reduziert. Durch die Integration der Tilgermasse in das am Fahrzeugbauteil angebrachte Anschlußteil werden gezielt die störenden Schwingungen dieses Bauteils in der Resonanz reduziert. Die Tilgermasse wird durch ein in Steifigkeit und Dämpfung auf die jeweilige Eigenfrequenz des Fahrzeugbauteils speziell abgestimmtes, elastomeres Federelement gegenüber dem Luftfederanschlußteil gelagert.

Eine vorteilhafte Ausgestaltung der Erfindung ist im Anspruch 2 gekennzeichnet. Die Rollbälge sind mindestens an einem Ende an einem Abrollkolben dicht befestigt. Dieser Abrollkolben dient als Anschlußteil und ist bei Fahrzeugen auf der Fahrzeugachse befestigt. Im Betriebszustand der Luftfeder bewegt sich der Abrollkolben durch das Ein- und Ausfedern innerhalb des Rollbalges, der sich umstülpt und eine Rollfalte bildet, die abhängig von der Ein- oder Ausfederbewegung über die Außenfläche des Abrollkolbens abrollt.

Eine weitere vorteilhafte Ausgestaltung der Erfindung wird im Anspruch 3 gekennzeichnet. Die kreisringförmige Schwingungstilgermasse ergibt einen rotationssymmetrischen Aufbau des Abrollkolbens der sich einfach herstellen läßt.

Eine vorteilhafte Ausführung der Schwingungstilgermasse wird im Anspruch 4 offenbart.

Gemäß Anspruch 5 ist der Elastomerkörper des Schwingungstilgers einseitig mit variablem Druck beaufschlagbar. Dadurch wird die Steifigkeit der Tilgerlagerung verstellbar. Über eine unterschiedliche Druckbeaufschlagung kann eine Verstimmung des Schwingungstilgers erreicht werden. Der Schwingungstilger kann so an unterschiedliche Resonanzfrequenzen eines Fahrzeugbauteils angepaßt werden.

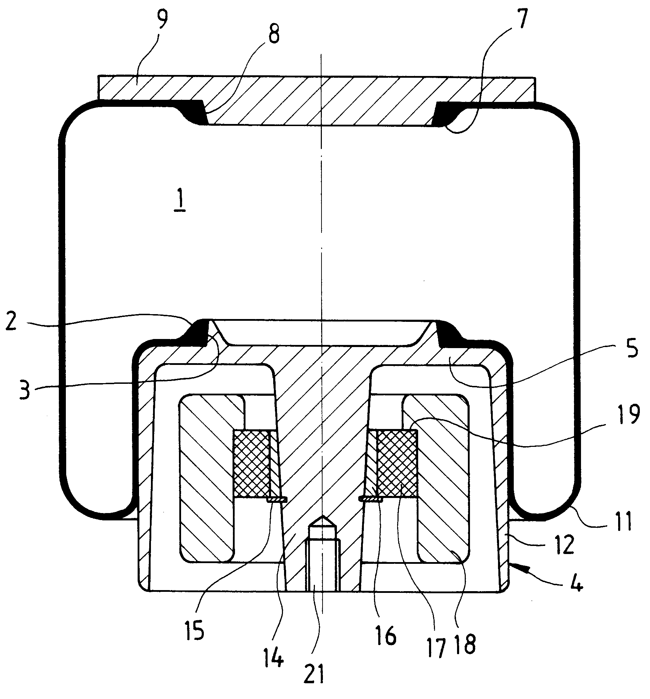

Anhand der Zeichnung wird nachstehend ein Ausführungsbeispiel näher erläutert.

Die gezeigte Luftfeder weist einen elastomeren Rollbalg 1 auf, der mit seiner unteren Balgöffnung, die von einem konischen Dichtwulst 2 begrenzt wird, auf einem konischen Dichtsitz 3 eines Abrollkolbens 4 sitzt. Der konische Dichtsitz 3 ist im Durchmesser kleiner als der Abrollkolben 4 und liegt auf seiner oberen Stirnplatte 5.

Mit seinem oberen Dichtwulst 7 ist der Rollbalg 1 auf einem konischen Dichtsitz 8 eines als Anschlußplatte 9 ausgebildeten Anschlußteils angeordnet. Die Anschlußplatte 9 wird über hier nicht gezeigte Elemente an einem Fahrzeugrahmen befestigt, während der Abrollkolben 4 an einem Teil der Fahrzeugachse angebracht wird.

Der Rollbalg 1 ist im Betriebszustand der Luftfeder gezeigt. Dabei bildet sich eine Rollfalte 11 des Rollbalges 1 aus, die beim Ein- und Ausfedern über die Außenfläche der Kolbenwand 12 des Abrollkolbens abrollt.

Der Abrollkolben 4 weist einen zentrischen, sich nach unten konisch verjüngenden Stützansatz 14 auf, der über die horizontale Stirnplatte 5 des Abrollkolbens 4 mit der Kolbenwand 12 verbunden und von der konzentrisch angeordneten Kolbenwand 12 umgeben ist. Der Stützansatz 14 weist einen Sprengring 15 auf, auf dem eine konische Metallhülse 16 aufliegt. Der Außenumfang der konischen Metallhülse 16 ist nabenförmig mit einem Zwischenring 17 aus Gummi zusammenvulkanisiert. Der Außenumfang des Zwischenringes 17 trägt eine anvulkanisierte, ringförmige Tilgermasse 18, die sich mit einer Stufe 19 auf der oberen Stirnfläche des Zwischenringes 17 formschlüssig abstützt.

Der Boden des Abrollkolbens 4 ist mit einer Gewindebohrung 21 versehen, über den der Abrollkolben fest mit einem unteren Fahrzeugbauteil, z.B. einer Fahrzeugachse, verbunden werden kann.

Bei Überfahren von Bodenunebenheiten wird die Fahrzeugachse über die Reifen zu Schwingungen auch im Resonanzbereich der Fahrzeugachse angeregt. Der Abrollkolben ist fest mit der Achse verbunden, so daß auch der im Abrollkolben angeordnete Schwingungstilger angeregt wird. Der Schwingungstilger ist auf die Achsresonanz ausgelegt. Dadurch wird eine gegenphasige Schwingung zu der Achsschwingung erzielt. Der Schwingungstilger wirkt den Achsschwingungen entgegen und reduziert diese. Dadurch wird weniger Schwingungsenergie über die Luftfeder in den Fahrzeugrahmen übertragen, was zur Reduzierung der störenden Einflüsse der Achsschwingungen führt.

## Patentansprüche

1. Luftfeder zur Abstützung eines Fahrzeugkörpers auf einem anderen, schwingenden Fahrzeugbauteil, z.B. einer Achse, mit einem druckluftbeaufschlagbaren Luftfederbalg aus elastomeren Werkstoff, dessen Enden auf je einem Anschlußteil luftdicht angeordnet sind, wobei das eine Anschlußteil am Fahrzeugkörper und das andere am Fahrzeugbauteil angebracht sind,
**dadurch gekennzeichnet**,
daß das am Fahrzeugbauteil angebrachte Anschlußteil (4) eine elastisch angebundene Schwingungstilgermasse (18) aufweist.

2. Luftfeder nach Anspruch 1, gekennzeichnet durch folgende Merkmale:
- der Luftfederbalg ist als Rollbalg (1) ausgebildet,
- der Rollbalg (1) stützt sich im Normalbetrieb auf dem als Abrollkolben (4) ausgebildeten Anschlußteil ab,
- der Abrollkolben (4) ist auf dem schwingenden Fahrzeugbauteil befestigt,
- im Abrollkolben (4) ist eine Tilgermasse (18) angeordnet und mit diesem elastisch verbunden.

3. Luftfeder nach Anspruch 1 und 2, dadurch gekennzeichnet, daß der Abrollkolben (4) einen inneren zentrischen Stützansatz (14) aufweist, der eine kreisringförmige Schwingungstilgermasse (18) über einen Elastomerkörper (17) trägt.

4. Luftfeder nach Anspruch 3, dadurch gekennzeichnet, daß der Schwingungstiiger aus einem inneren, nabenförmigen Ring (16) aus hartem Werkstoff und einem äußeren Ring (18) mit größerer Masse aus hartem Werkstoff besteht, wobei die beiden Ringe (16 und 18) über ein zwischenliegendes Elastomerbauteil (17) miteinander elastisch verbunden sind.

5. Luftfeder nach Anspruch 1 bis 4, dadurch gekennzeichnet, daß der Elastomerkörper (17) des Tilgers einseitig mit variablem Druck beaufschlagbar ist.
